## Europäisches Patentamt

## European Patent Office

## Office européen des brevets

(11) Veröffentlichungsnummer : **0 139 894**
**B1**

(12) **EUROPÄISCHE PATENTSCHRIFT**

(45) Veröffentlichungstag der Patentschrift :
09.09.87

(21) Anmeldenummer : 84108968.3

(22) Anmeldetag : 28.07.84

(51) Int. Cl.⁴ : **B 21 D 28/00**

(54) **Motorbetriebene Handmaschine mit zweiteiligem Werkzeug, insbesondere zum Stanzen.**

(30) Priorität : 07.09.83 DE 3332258

(43) Veröffentlichungstag der Anmeldung :
08.05.85 Patentblatt 85/19

(45) Bekanntmachung des Hinweises auf die Patenterteilung : 09.09.87 Patentblatt 87/37

(84) Benannte Vertragsstaaten :
**CH FR GB IT LI**

(56) Entgegenhaltungen :
**US-A- 3 946 925**
**US-A- 4 189 933**

(73) Patentinhaber : **Trumpf GmbH & Co**
**Postfach 1320 Johann-Maus-Strasse 2**
**D-7257 Ditzingen (DE)**

(72) Erfinder : **Walser, Hans-Heinrich**
**Guella**
**CH-7214 Grüsch (CH)**

(74) Vertreter : **Schmid, Berthold et al**
**Patentanwälte Dipl.-Ing. B. Schmid Dr. Ing. G. Birn**
**Dipl.-Phys. H. Quarder Falbenhennenstrasse 17**
**D-7000 Stuttgart 1 (DE)**

**Beschreibung**

Die Erfindung bezieht sich auf eine motorbetriebene Handmaschine mit einem zweiteiligen, aus einem hin- und herbewegbaren Werkzeugteil und einem gehäusefesten Werkzeugteil bestehenden Werkzeug, insbesondere zum Stanzen, Schneiden, Nibbeln und dgl. Derartige Maschinen sind beispielsweise als Nibbelmaschinen oder als elektrische Scheren, insbesondere bei der Blechverarbeitung, bekannt. Wenn von einer Blechtafel ein Stück ab- oder ausgeschnitten werden soll, so führt das bewegbare Werkzeugteil bei einer Schere während der Dauer der Schalterbetätigung fortwährend Arbeits- bzw. Schneidhübe aus. Entsprechendes gilt für den Stempel einer Nibbelmaschine. Andererseits gibt es aber Anwendungsfälle, wo man lediglich einen Arbeitshub benötigt, um beispielsweise ein einziges Loch aus einem Werkstück, insbesondere einer Blechtafel, auszustanzen. Wegen der vergleichsweise hohen Geschwindigkeit des Arbeitshubs ist es in der Praxis quasi unmöglich, durch ganz kurzzeitiges Einschalten des Antriebsmotors lediglich einen einzigen Arbeitshub des bewegbaren Werkzeugteils zu bewirken.

Das Durchführen lediglich eines einzigen Arbeitshubs bzw. Arbeitsspiels eines hin- und herbewegbaren Werkzeugs ist bei einem von Hand antreibbaren Gerät an sich bekannt (US-A-4 189 933). Die Steuerung erfolgt dabei mittels eines drehbaren Nockens und eines diesen abtastenden Glieds.

Die Aufgabe der Erfindung besteht infolgedessen darin, eine motorbetriebene Handmaschine der eingangs genannten Art so auszubilden, daß mit ihr gezielt und sicher einzelne Arbeitshübe des bewegbaren Werkzeugteils durchgeführt werden können.

Zur Lösung dieser Aufgabe wird erfindungsgemäß vorgeschlagen, daß die motorbetriebene Handmaschine gemäß dem Oberbegriff des Anspruchs 1 entsprechend dem kennzeichnenden Teil dieses Anspruchs ausgebildet ist. Bei dieser motorbetriebenen Handmaschine wird der Antriebsmotor mittels des Schalters in bekannter Weise eingeschaltet, jedoch bewirkt die zwischen Motor und bewegbares Werkzeugteil eingebaute Kupplung, daß das Werkzeugteil trotz des laufenden Motors zunächst in seiner Ausgangsstellung veharrt. Bei letzterer handelt es sich vorzugsweise um etwa die obere Totpunktlage, wodurch der Rachenraum od. dgl. in seiner vollen Höhe zugänglich ist. Erst durch Betätigung eines entsprechenden Betätigungsorgans wird die Kupplung eingerückt oder geschlossen und danach wird dann das Drehmoment vom Antriebsmotor auf die nachgeschalteten Antriebselemente bis hin zum bewegbaren Werkzeugteil übertragen. Letzteres führt dann einen Arbeitshub durch. Es wird von der Stillsetzungseinrichtung nach dem Rückhub automatisch wieder angehalten.

Dabei sieht eine besonders bevorzugte Ausführungsform der Erfindung vor, daß die Betätigungsvorrichtung der Kupplung und/oder die Stillsetzungseinrichtung zum Anhalten etwa im oberen Totpunkt die Kupplung nach ca. einem Arbeitsspiel öffnet. Demnach kann mit diesem zweiteiligen Werkzeug ein einzelner Stanzhub durchgeführt werden, wenn es sich bei diesem zweiteiligen Werkzeug beispielsweise um einen Stanzstempel und eine dazugehörige Matrize handelt. Das Stillsetzen etwa in der oberen Totpunktlage ist bei herkömmlichen stationären Nibbelmaschinen und dgl. Maschinen mit hin- und herbewegbarem, oberem Werkzeugteil bekannt. Man kann die Hand-Maschinen insoweit, gegebenenfalls nach entsprechender Anpassung insbesondere an die Notwendigkeiten der Kupplung, dementsprechend ausbilden. Theoretisch sind eine Reihe der bekannten Kupplungen verwendbar, jedoch sollten sie, beispielsweise bei einer elektrischen Handmaschine, auch elektrisch betätigbar und zum Verbinden mit der Stillsetzungseinrichtung geeignet sein. Außerdem sollten die Abmessungen und das Gewicht klein sein, weil bei einer Handmaschine grundsätzlich ein Minimalgewicht gefordert wird.

Motorbetriebene Handmaschinen wie Nibbler, Scheren u. dgl. arbeiten in der Regel mit einem sehr schnellaufenden Elektromotor, der beispielsweise mit 20 000 Umdrehungen pro Minute dreht. Diese Drehzahl wird über ein meist mehrstufiges Getriebe reduziert. Bei Verwendung eines solchen Motors werden an die Kupplung und auch an die Anordnung der Kupplung im Kraftfluß ganz besondere Anforderungen gestellt. Man ist deshalb zunächst geneigt, die Kupplung möglichst am Ende dieses mehrstufigen Getriebes einzubauen, weil dort die Drehzahl niedrig ist. Dem steht aber entgegen, daß dafür das Drehmoment zum Kupplungsabtrieb hin ansteigt und zu seiner Übertragung eine kräftige und damit große Kupplung notwendig ist, wenn man sie auf die Abtriebswelle aufsetzt. Infolgedessen muß hier ein Kompromiß zwischen den verschiedenen Bedürfnissen gefunden werden.

In Weiterbildung der Erfindung wird bei einer motorbetriebenen Handmaschine mit einem mehrstufigen Getriebe zwischen Antriebsmotor und Werkzeug-Aufnahme vorgeschlagen, daß die Kupplung zwischen die erste und nächstfolgende Getriebestufe geschaltet ist. Hinter der ersten Getriebestufe — vom Motor aus gerechnet — beträgt die Motordrehzahl beim genannten Beispiel noch ca. dreitausend bis fünftausend Umdrehungen pro Minute. Dies ist eine Drehzahl, welche den Einbau einer herkömmlichen Kupplung gestattet, welche einerseits vergleichbar klein und andererseits so rasch zu öffnen und zu schließen ist, daß zwischen diesen beiden Vorgängen das hin- und herbewegbare Werkzeugteil nur eine bzw. maximal eine Ab- und Aufwärtsbewegung durchführt.

In weiterer Ausgestaltung der Erfindung wird vorgeschlagen, daß eine Stillsetzungseinrichtung für etwa einen Arbeits- und Rückhub mit der Abtriebsseite der Kupplung oder der bzw. einer der nächstfolgenden Getriebstufen verbunden ist. Wenn die Kupplung durch Handauslösung eingerückt oder geschlossen wird, so führt dies auch zur Ingangsetzung der Stillsetzungseinrichtung, welche durch rechtzeitiges Ausrücken der Kupplung einen zweiten Arbeitshub verhindert und zugleich bewirkt, daß der bewegbare Werkzeugteil etwa in seiner oberen Totpunktlage stillgesetzt wird.

Eine andere bevorzugte Variante der Erfindung sieht vor, daß die Kupplung in der Art einer Schlingfederkupplung ausgebildet ist und eine antriebsseitige sowie abtriebsseitige, insbesondere muffenartige Kupplungshälfte, und eine aufspreizbare, an der abtriebsseitigen Kupplungshälfte drehfest gehaltene Kupplungsfeder aufweist. Die beiden Kupplungshälften ragen mit zapfenförmigen Ansätzen od. dgl. ins Innere der in der Art einer Schraubenfeder ausgebildeten Schlingfeder hinein. Weil jedoch die Schlingfeder durch eine mechanische Kraft aufgeweitet ist, liegt sie zumindest am antriebsseitigen Zapfen nicht an. Gibt man nun dieses antriebsseitige Schlingfederende frei, was angesichts der hohen Drehzahl und der kurzen zur Verfügung stehenden Zeit schlagartig erfolgen muß, so führt dies zum Ankuppeln der im Kraftfluß nachgeschalteten Getriebeteile bis hin zum bewegbaren Werkzeugteil. Zugleich muß auch die Stillsetzungseinrichtung aktiviert oder in Gang gesetzt werden, damit sie die Kupplung rechtzeitig wieder öffnet. Letzteres geschieht in der Weise, daß man auf das, beispielsweise radial abstehende, antriebsseitige Schlingfederende im Sinne einer Aufspreizung der Schlingfeder einwirkt. Dadurch wird der antriebsseitige Zapfen wieder frei und dies führt dann zum Stillstand der zweiten und gegebenenfalls nachfolgender Getriebstufen.

In weiterer Ausbildung der Erfindung wird vorgeschlagen, daß die antriebsseitige Kupplungshälfte mit einem Getrieberad am Ende der ersten Getriebestufe drehfest verbunden ist, und das der antriebsseitigen Kupplungshälfte zugeordnete Federende bei aufgespreizter Feder insbesondere indirekt an einem betätigbaren Element der Betätigungsvorrichtung abgestützt ist. Dabei steht die Feder aufgrund der Aufspreizung unter einer vergleichsweise hohen Federspannung, so daß sie sich nach Freigabe durch das betätigbare Element schlagartig zusammenzieht und dadurch das Ankuppeln an den sich drehenden antriebsseitigen Zapfen oder Schaft dieser Kupplung bewirkt. Das Element der Betätigungsvorrichtung wird vorteilhafterweise indirekt über einen entsprechenden Mechanismus betätigt.

Eine weitere bevorzugte Ausführungsform der Erfindung sieht vor, daß das betätigbare Element der Betätigungsvorrichtung zugleich ein Element der Stillsetzungseinrichtung oder damit bewegungsmäßig verbunden ist. Dies bedeutet, daß man durch Einwirken auf das betätigbare Element einerseits die Kupplung einrückt und andererseits zugleich die Stillsetzungseinrichtung in Gang setzt oder ihren Antrieb freigibt. Aufgrund dieser zwangsweisen mechanischen Kupplung dieser beiden Einrichtungen ist sichergestellt, daß unabhängig von der Stellung des Betätigungsorgans für das Binrücken der Kupplung die Stillsetzungseinrichtung tätig wird, sobald der Arbeitshub vollzogen ist.

Dabei ist es besonders vorteilhaft, daß das betätigbare Element ein drehbar gelagerter Hebel mit zwei insbesondere winklig zueinander versetzten Hebelarmen ist, wobei ein erster Hebelarm eine Sperrklinke für das anliegende, gespannte Federende oder ein fest damit verbundenes Drehglied mit einem Sperrnocken und ein zweiter Hebelarm einen Steuerstift od. dgl. trägt, der mit einer vom Antriebsmotor bei geschlossener Kupplung angetriebenen Rückführ-Kulisse zusammenwirkt und die Stillsetzungseinrichtung zumindest im wesentlichen bildet. Zugleich mit der Freigabe der Sperrklinke bzw. des betreffenden Federendes, wird auch der Steuerstift, der in der Art eines Kulissensteins wirkt, in seine Ausgangsstellung gebracht, aus der heraus er im Zusammenwirken mit der, beispielsweise als Teil einer Steuerkurve, ausgebildeten Rückführkulisse den Hebel in seine Ausgangslage zurückschwenkt. Dies muß erreicht sein, bevor die Sperrklinke eine volle Umdrehung durchgeführt hat. Dann liegt nämlich das freie Ende des ersten Hebelarms im Bewegungsbereich der Sperrklinke und diese trifft somit auf diesem Hebelarmende auf, so daß die Drehbewegung beendet und die Feder wieder ausgespreizt wird.

In Weiterbildung der Erfindung wird vorgeschlagen, daß der Hebel über eine Steuerstange, durch ein insbesondere drehbar gelagertes Betätigungsorgan, vorzugsweise einen schwenkbaren Hebel verschwenkbar und der Hebel ein weiterer Hebel des betätigbaren Elements ist. Dadurch kann man einerseits die Kupplung und andererseits auch das Betätigungsorgan an den jeweils günstigsten Stellen plazieren. Hierbei ist vor allen Dingen vorgesehen, daß das Betätigungsorgan für den Hebel bzw. das Drehglied am bzw. an einem Handgriff der Handmaschine gelagert ist. Eine besonders günstige Anordnung ist im Eckbereich eines winkelförmigen, beispielsweise oberen Haltegriffes im Getriebebereich, wobei dieser Griff von der Hand umfaßt und das Betätigungsorgan dann vom Daumen leicht erreichbar ist. Statt dessen kann natürlich auch ein bügelartiger Griff verwendet werden. Zumindest über die Steuerstange kann das Betätigungsorgan in die Ausgangslage wieder zurückgeführt werden.

Die Erfindung wird nachstehend anhand der Zeichnung näher erläutert. Die Zeichnung zeigt ein Ausführungsbeispiel der Erfindung. Hierbei stellen dar :

Figur 1 einen teilweisen Längsschnitt durch die motorbetriebene Handmaschine,

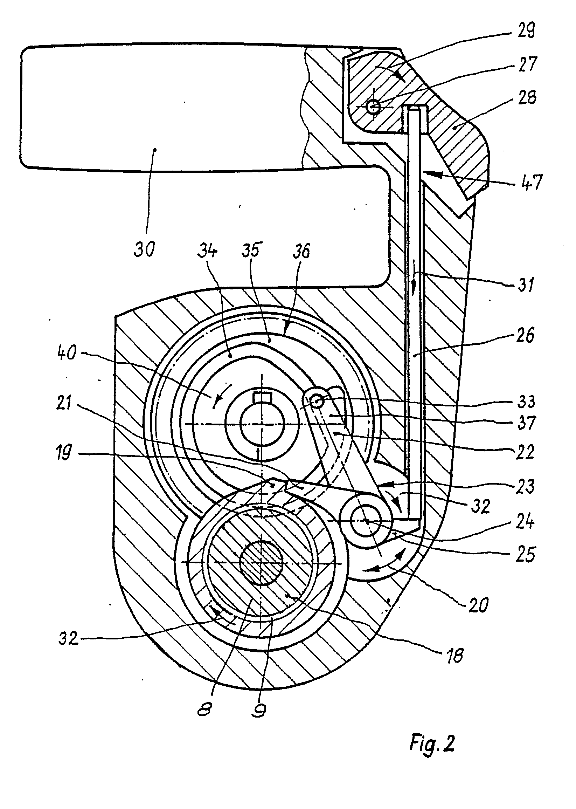

Figur 2 einen Schnitt gemäß der Linie II-II der Fig. 1.

Im Hauptgriff 1 der motorbetriebenen Handmaschine befindet sich ein nicht gezeigter Elektromotor 2, der mit sehr hoher Motordrehzahl, beispielsweise mit zwanzigtausend U/min, läuft. Er wird mittels eines Schalters ein- und ausgeschaltet. Die hohe Motordrehzah l wird mittels eines mehrstufigen Getriebes untersetzt. In der ersten Getriebestufe 3 befindet sich ein Ritzel 4. Dieses kämmt mit einer Zahnrad 5, welches drehfest mit der Kupplung 6, genauer gesagt der antriebsseitigen Kupplungshälfte 7, verbunden ist. Zwischen letzterer und der abtriebsseitigen Kupplungshälfte 8 ist eine Kupplungsfeder 9 geschaltet, die in der Art einer Schlingfeder ausgebildet ist und zwei gegeneinanderweisende zapfen- oder rohrförmige Ansätze der beiden Kupplungshälften übergreift. Ihr eines Ende ist mit der abtriebsseitigen Kupplungshälfte 8 fest verbunden, während ihr anderes der antriebsseitigen Kupplungshälfte 7 zugeordnetes Ende mit einer Nockenscheibe 18 fest verbunden ist. Wenn man letztere entgegen dem Wicklungssinn der einzelnen Federwingungen dreht, so führt dies zu einem Vergrößern des Federdurchmessers und damit insgesamt zu einem Aufspreizen, zumindest des der antriebsseitigen Kupplungshälfte zugeordneten Federendes. Dadurch wird eine Berührung dieses Federendes mit dieser Kupplungshälfte vermieden. Wenn also die antriebsseitige Kupplungshälfte vom Motor über die erste Getriebestufe angetrieben wird, so endigt der Kraftfluß im Bereich dieses aufgeweiteten Federendes. Sobald man letzteres freigibt, zieht sich die Feder aufgrund der erzeugten Spannung unter Verengung ihrer Windungen zusammen, wodurch sie sich an den zapfenoder rohrförmigen Ansatz der antriebsseitigen Kupplungshälfte 7 anschmiegt und dadurch die Kraft auf die abtriebsseitige Kupplungshälfte 8 und die nachgeschalteten Getriebeteile überträgt. Der Abtrieb des Getriebes ist mit einer Exzenterwelle 10 verbunden, die sich bei geschlossener Kupplung mit einer dem Untersetzungsgrad des Getriebes entsprechenden Drehzahl dreht. Der Exzenter der Exzenterwelle 10 ist mit 11 bezeichnet, und er greift in bekannter Weise in eine Bohrung eines Pleuels 12 ein. Dieses ist über einen Bolzen 13 mit einem Stößel gekuppelt, der sich bei drehendem Exzenter im Sinne des Doppelpfeils 15 auf und ab bewegt. Am freien Ende 16 des Stößels 14 befindet sich eine Aufnahme für das nicht gezeigte bewegbare Werkzeugteil, beispielsweise einen Stanzstempel eines wenigstens zwei Teile umfassenden Werkzeugs, insbesondere Stanz- oder Schneidwerkzeugs. Das zugehörige untere Werkzeugteil, welches gegenüber dem Gehäuse 17 der Handmaschine ortsfest ist, ist in bekannter Weise in einem Bügel des letzteren montiert.

Die Nockenscheibe 18 trägt einen beispielsweise angeformten Nocken 19, an welchem das freie Ende eines im Sinne des Doppelpfeils 20 drehbaren Hebels 21 anliegt. Der Hebel 21 ist der eine Hebelarm eines drehfest mit einem weiteren Hebelarm 22 gekuppelten Drehglieds 23. Dessen Drehachse ist mit 24 bezeichnet. Etwa in Verlängerung vom einen Hebelarm 21 erstreckt sich nach entgegengesetzter Richtung ein dritter kurzer Hebelarm 25. An diesem liegt das innere Ende einer Steuerstange 26 an. Am äußerem Ende der Steuerstange 26 liegt außerhalb von seiner Drehachse 27 ein Hebel 28 an, der im Sinne des Pfeils 29 eindrückbar ist und der Betätigungsvorrichtung 47 angehört. Die Drehachse befindet sich etwa im Eckbereich eines winkelförmigen zusätzlichen Haltegriffs 30.

Es ist leicht einzusehen, daß man durch Niederdrücken des Hebels 28 eine Verschiebebewegung der Steuerstange 26 in Pfeilrichtung 31 bewirkt, die in eine Drehbewegung des Drehglieds 23 im Sinne des Pfeils 32 umgesetzt wird. Dadurch gibt dann das freie Ende des Hebelarms 21 den Nocken 19 frei, der unter der Spannung der aufgespreizten Kupplungsfeder steht. Infolgedessen dreht sich die Nockenscheibe 18 unter der Wirkung der Federkraft in Pfeilrichtung 32. Die Federwindungen verengen sich, und das hat ein Schließen der Kupplung und damit den Antrieb des Stößels 14 zur Folge.

Zugleich mit dem Hebelarm 21 wird auch der weitere Hebelarm 22 in Pfeilrichtung 32 verschwenkt. Er trägt einen Steuerzapfen 33, der mit einer Kulissenführung 34 einer Scheibe 35 zusammenarbeitet, und damit eine Stillsetzungseinrichtung 36 bildet.

Die Kulissenführung 34 ist an der dem Steuerzapfen 33 in seiner Ausgangslage zugeordneten Stelle absatzweise erweitert, so daß der Steuerzapfen die notwendige Radialbewegung nach außen durchführen kann. Über eine Verengung 37 wird der Steuerzapfen 33 wieder auf die Kulissenführung 34 gebracht und läuft dann anschließend entlang dem sich im Sinne einer verengenden Kurve ausgebildeten Teil der Kulissenführung 34. Dies führt zu einen Rückschwenken des Drehglieds 23. Damit gelangt dann das freie Ende des einen Hebelarms 21 in den Bewegungsbereich des Nockens 19, so daß dieser beim Auftreffen auf das freie Hebelarmende schlagartig gestoppt wird. Dies führt zu einem Aufspreizen der Feder und damit zum Öffnen der Kupplung. Die Getrieberäder sind so ausgelegt, daß eine Umdrehung der Nockenscheibe 18 einen Ab- und Aufwärtshub des Stößels 14 ergibt. Außerdem erreicht man durch die Montage der verschiedenen Antriebszahnräder für den Exzenter 11, daß sich der Stößel 14 bei geöffneter Kupplung etwa in seiner oberen Totpunktlage befindet.

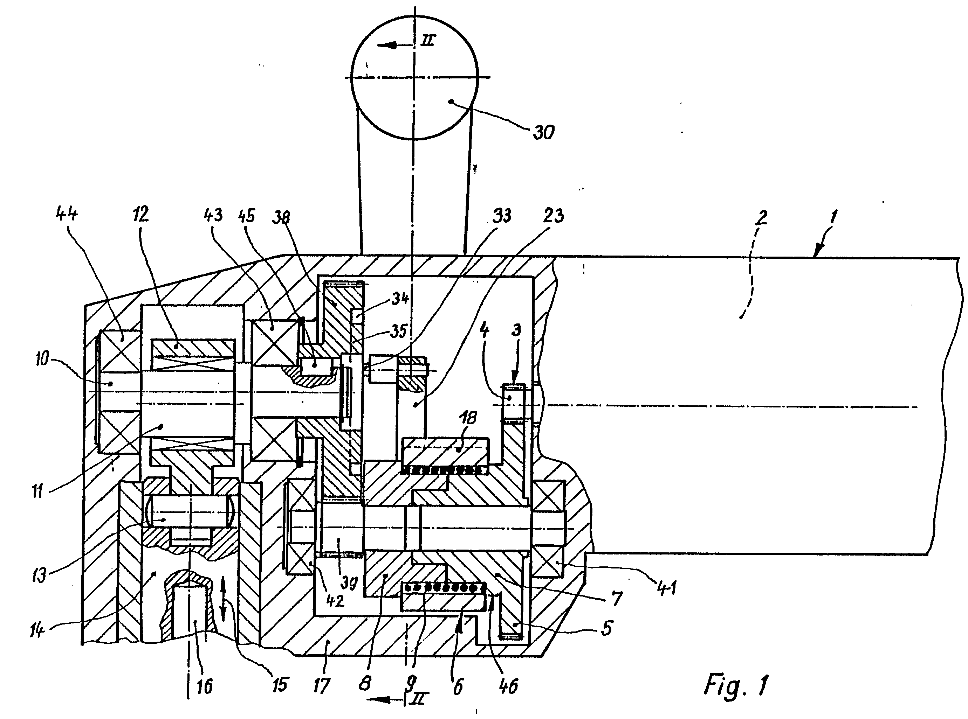

Aus Fig. 1 ersieht man, daß die Scheibe 35 drehfest mit einem Zahnrad 38 verbunden ist und mittels eines Ritzels 39 im Sinne des Pfeils 40 angetrieben wird. Das Ritzel 39 ist drehfest mit der abtriebsseitigen Kupplungshälfte 8 verbunden. Im übrigen sind aus Fig. 1 Lager 41 und 42 der Kupplung 6 schematisch eingezeichnet. Die Lager der Exzenterwelle tragen die Bezugszahlen 43 und 44. Fine Passfeder 45 schafft die drehfeste Verbindung der Exzenterwelle 10 mit dem Zahnrad 38. Das Ritzel 39 und das Zahnrad 38 bilden die zweite bzw. letzte Stufe des die Motordrehzahl untersetzenden Getriebes 46.

**Patentansprüche**

1. Motorbetriebene Handmaschine mit einem zweiteiligen, aus einem hin- und herbewegbaren Werkzeugteil und einem gehäusefesten Werkzeugteil bestehenden Werkzeug, insbesondere zum Stanzen, Schneiden, Nibbeln u. dgl., gekennzeichnet durch eine zwischen Antriebsmotor (2) und Aufnahme (16) für das bewegbare Werkzeugteil angeordnete, von Hand betätigbare Kupplung (6) und eine Stillsetzungseinrichtung (36) zum automatischen Anhalten des bewegbaren Werkzeugteils etwa in seiner oberen Totpunktlage, wobei die Betätigungsvorrichtung der Kupplung (6) und/oder die Stillsetzungseinrichtung (36) zum Anhalten etwa im oberen Totpunkt die Kupplung nach ca. einem aus Arbeits- und Rückhub bestehenden Arbeitsspiel öffnet.

2. Maschine nach Anspruch 1, mit einem mehrstufigen Getriebe zwischen Antriebsmotor (2) und Werkzeug-Aufnahme (16), dadurch gekennzeichnet, daß die Kupplung (6) zwischen die erste (3) und nächstfolgende Getriebestufe (39, 38) geschaltet ist.

3. Maschine nach Anspruch 2, dadurch gekennzeichnet, daß eine Stillsetzungseinrichtung (36) für etwa einen Arbeits- und Rückhub mit der Abtriebsseite der Kupplung (6) oder der bzw. einer der nächstfolgenden Getriebestufen (39, 38) verbunden ist.

4. Maschine nach wenigstens einem der vorhergehenden Ansprüche, dadurch gekennzeichnet, daß die Kupplung (6) in der Art einer Schlingfederkupplung ausgebildet ist und eine antriebsseitige (7) sowie abtriebsseitge, insbesondere muffenartige Kupplungshälfte (8) sowie eine aufspreizbare, an der abtriebsseitigen Kupplungshälfte (8) drehfest gehaltene Kupplungsfeder (9) aufweist.

5. Maschine nach Anspruch 4, dadurch gekennzeichnet, daß die antriebsseitige Kupplungshälfte (7) mit einem Getrieberad (5) am Ende der ersten Getriebestufe (3) drehfest verbunden ist, und das der antriebsseitigen Kupplungshälfte (7) zugeordnete Federende bei aufgespreizter Feder (9), insbesondere indirekt, an einem betätigbaren Element (23) der Betätigungsvorrichtung (47) abgestützt ist.

6. Maschine nach Anspruch 5, dadurch gekennzeichnet, daß das betätigbare Element (23) der Betätigungsvorrichtung (47) zugleich ein Element der Stillsetzungseinrichtung (36) oder damit bewegungsmäßig verbunden ist.

7. Maschine nach Anspruch 6, dadurch gekennzeichnet, daß das betätigbare Element (23) ein drehbar gelagerter Hebel mit zwei, insbesondere winklig zueinander versetzen Hebelarmen (21, 22) ist, wobei ein erster Hebelarm (21) eine Sperrklinke für das anliegende Federende oder ein fest damit verbundenes Drehglied (18) mit einem Sperrnocken (19) und ein zweiter Hebelarm (21) einen Steuerstift (33) od. dgl. trägt, der mit einer vom Antriebsmotor (2) bei geschlossener Kupplung (6) angetriebenen Rückführ-Kulisse (34) zusammenwirkt und die Stillsetzungseinrichtung (36) bildet.

8. Maschine nach Anspruch 7, dadurch gekennzeichnet, daß der Hebel (28) über eine Steuerstange (26) durch ein insbesondere drehbar gelagertes Betätigungsorgan, vorzugsweise einen schwenkbaren Hebel (25), verschwenkbar und der Hebel (25) ein weiterer Hebelarm des betätigbaren Elements (23) ist.

9. Maschine nach Anspruch 8, dadurch gekennzeichnet, daß das Betätigungsorgan (28) für den Hebel (25) bzw. das Drehglied (23) am bzw. an einem Handgriff (30) der Maschine gelagert ist.

10. Maschine nach wenigstens einem der Ansprüche 5 bis 9, dadurch gekennzeichnet, daß das der antriebsseitigen Kupplungshälfte (7) zugeordnete Federende über eine Nockenscheibe (18) der Betätigungsvorrichtung (47), an welcher es befestigt ist, indirekt mit dem betätigbaren Element (23) der Betätigungsvorrichtung (47) bzw. der Stillsetzungseinrichtung (36) verbunden ist.

**Claims**

1. Motor driven hand machine with a two-part tool consisting of a reciprocating tool part and a tool part which is rigid with the housing, and intended in particular for stamping, cutting, nibbling and the like, characterised by, disposed between the driving motor (2) and the housing (16) for the movable tool part, a manually operable coupling (6) and an immobilising device (36) for automatically stopping the movable tool part substantially in its top dead centre position, the device for actuating the coupling (6) and/or the immobilising device (36) for stopping substantially in the top dead centre position opening the coupling after approximately one working cycle comprising working stroke and return stroke.

2. Machine according to Claim 1 with a multistage gearing between driving motor (2) and tool housing (16), characterised in that the coupling (6) is located between the first (3) and the subsequent gear stage (39, 38).

3. Machine according to Claim 2, characterised in that an immobilising device (36) for substantially one working stroke and one return stroke is connected to the output side of the coupling (6) or the or one of the subsequent gear stages (39, 38).

4. Machine according to at least one of the preceding Claims, characterised in that the coupling (6) is constructed in the manner of a wrap spring clutch and comprises one half coupling (7) on the drive side and another, particularly a sleeve type half coupling (8) on the output side, as well as a clutch spring (9) which can be opened out but which is rotationally rigidly fixed on the output side clutch half (8).

5. Machine according to Claim 4, characterised in that the drive side clutch half (7) is rotationally rigidly connected to a gearwheel (5) on the end of the first gear stage (3) and in that when the spring (9) is opened out, the spring end associated with the drive side clutch half (7) is in particular indirectly braced on an operable element (23) of the actuating device (47).

6. Machine according to Claim 5, characterised in that the operable element (23) of the actuating device (47) is at the same time an element of the immobilising device (36) or is connected thereto for motion.

7. Machine according to Claim 6, characterised in that the operable element (23) is a rotatably mounted lever having two particularly angularly offset lever arms (21, 22), the first lever arm (21) comprising a detent for the spring end bearing on it or a rotary element (18) rigidly connected thereto and having a locking dog (19) and a second lever arm (21) carrying a control pin (33) or the like which co-operates with a return slide (34) driven by the driving motor (2) when the clutch (6) is closed, to constitute the immobilising device (36).

8. Machine according to Claim 7, characterised in that the lever (28) can be pivoted via a control rod (26) through an in particular rotatably mounted actuating member, preferably a pivotable lever (25), the lever (25) being a further lever arm of the operable element (23).

9. Machine according to Claim 8, characterised in that the actuating member (28) for the lever (25) or the rotary member (23) is mounted on the or on a handle (30) of the machine.

10. Machine according to at least one of Claims 5 to 9, characterised in that the spring end associated with the drive side clutch half (7) is indirectly connected to the operable element (23) of the actuating device (47) or immobilising device (36) via a cam plate (18) on the actuating device (47), on which it is mounted.

**Revendications**

1. Machine à main actionnée par moteur, munie d'un outil en deux parties formé d'une partie d'outil pouvant aller et venir et d'une partie d'outil solidaire du carter, en particulier pour l'estampage, le coupage, le grignotage et analogues, caractérisée par un accouplement (6) pouvant être actionné manuellement, disposé entre le moteur d'entraînement (2) et le logement (16) destiné à la partie d'outil mobile, et un dispositif d'immobilisation (36) pour l'arrêt automatique de la partie d'outil mobile à peu près dans sa position de point mort supérieur, le dispositif d'actionnement de l'accouplement (6) et/ou le dispositif d'immobilisation (36) ouvrant l'accouplement, pour l'arrêt à peu près au point mort supérieur, au bout d'environ un cycle de travail formé d'une course de travail et d'une course de retour.

2. Machine selon la revendication 1, munie d'une transmission à plusieurs vitesses entre moteur d'entraînement (2) et logement d'outil (16), caractérisée en ce que l'accouplement (6) est branché entre la première vitesse (3) de la transmission et celle qui suit immédiatement (39, 38).

3. Machine selon la revendication 2, caractérisée en ce qu'un dispositif d'immobilisation (36) est relié, pendant à peu près une course de travail et une course de retour, au côté mené de l'accouplement (6) ou des vitesses immédiatement suivantes (39, 38) ou de l'une de celles-ci.

4. Machine selon au moins une des revendications précédentes, caractérisée en ce que l'accouplement (6) est constitué à la façon d'un accouplement par ressort enroulé et présente une moitié d'accouplement du côté menant (7) ainsi qu'une moitié d'accouplement du côté mené (8), en particulier similaire à un manchon, ainsi qu'un ressort d'accouplement (9) pouvant s'écarter, retenu de façon solidaire en rotation sur la moitié d'accouplement du côté mené (8).

5. Machine selon la revendication 4, caractérisée en ce que la moitié d'accouplement du côté menant (7) est reliée de façon solidaire en rotation à une roue de transmission (5) à la fin de la première vitesse de transmission (3), et en ce que l'extrémité du ressort qui est adjointe à la moitié d'accouplement du côté menant (7) est soutenue en particulier indirectement, quand le ressort (9) est écarté, sur un élément pouvant être actionné (23) du dispositif d'actionnement (47).

6. Machine selon la revendication 5, caractérisée en ce que l'élément pouvant être actionné (23) du dispositif d'actionnement (47) est en même temps un élément du dispositif d'immobilisation (36) ou est relié à celui-ci quant au mouvement.

7. Machine selon la revendication 6, caractérisée en ce que l'élément pouvant être actionné (23) est un levier monté de manière à pouvoir tourner, muni de deux bras de levier (21, 22), en particulier décalés angulairement l'un par rapport à l'autre, un premier bras de levier (21) portant un cliquet de blocage pour l'extrémité adjacente du ressort ou un organe de rotation (18) qui lui est relié solidairement, avec une came de blocage (19) et un deuxième bras de levier (21) portant une broche de commande (33), ou analogue, qui coopère avec une coulisse de rappel (34) entraînée par le moteur d'entraînement (2) quand l'accouplement est fermé, et formant le dispositif d'immobilisation (36).

8. Machine selon la revendication 7, caractérisée en ce que le levier (28) peut être amené à pivoter par l'intermédiaire d'une tige de commande (26), par un organe d'actionnement monté en particulier de manière à pouvoir tourner, de préférence un levier pouvant pivoter (25), et en ce que le levier (25) est un autre bras de levier de l'élément pouvant être actionné (23).

9. Machine selon la revendication 8, caractérisée en ce que l'organe d'actionnement (28) du levier (25) ou de l'organe tournant (23) est monté sur la poignée ou sur une poignée (30) de la machine.

10. Machine selon au moins une des revendications 5 à 9, caractérisée en ce que l'extrémité du ressort qui est adjointe à la moitié d'accouplement du côté menant (7) est reliée indirectement, par l'intermédiaire d'un plateau de came (18) du dispositif d'actionnement (47), auquel elle est fixée, à l'élément pouvant être actionné (23) du dispositif d'actionnement (47) ou du dispositif d'immobilisation (36).

Fig. 1

0 139 894

Fig. 2